# EUROPEAN PATENT SPECIFICATION

(11) **EP 3 073 354 B1**
(45) Date of publication and mention of the grant of the patent: **15.08.2018**
(21) Application number: 15160818.9
(22) Date of filing: 25.03.2015
(51) Int. Cl.: G06F 3/041

(54) **A TOUCH DETECTION METHOD**
BERÜHRUNGSERKENNUNGSVERFAHREN
PROCÉDÉ DE DÉTECTION DE TOUCHER

(30) Priority: 24.03.2015 EP 15160577
(43) Date of publication of application: 28.09.2016
(73) Proprietor: Vestel Elektronik Sanayi ve Ticaret A.S., 45030 Manisa (TR)
(72) Inventor: Kirisken, Barbaros, 45030 Manisa (TR); Özbatir, Naz, 45030 Manisa (TR); Özvural, Görkem, 45030 Manisa (TR)
(74) Representative: Ascherl, Andreas

(56) References cited:
- WO-A2-2006/135483
- GB-A- 2 138 567
- US-A1- 2006 279 553

## Description

### Technical Field

Present invention is related to a touch detection method for the touch screens with piezoelectric sensors.

### Prior Art

Electronic devices with human interface use different input devices in order to receive inputs from users. In the conventional methods keyboards, keypads and/or mice are used as input devices. Nowadays, touch panels, such as touch screens, become more popular for receiving inputs. Touch panels not only provide functionality of the conventional input devices, but they provide additional functions. For example, with the appropriate software, users are able to use touch panels for drawing, sketching, and handwriting operations.

In the known art, different touch panels are used for receiving the user input. As disclosed in prior art document EP1411420A1, one of the known touch panel type is resistive touch panel. In the resistive touch panels comprise pluralities of vertical and horizontal resistors. Without any touch, said resistors are not in contact. When a touch is received, horizontal resistor and vertical resistor at the location of the touch engage. Therefore, location of the touch is determined according to contacting resistors. In the resistive touch panels, touch location may be determined erroneously because of the limited number of the resistors. Moreover, in the resistive touch panels, locations of the simultaneous touches (multi-touch) are not able to be determined.

Another touch panel type is capacitive touch panel, as disclosed in prior art document EP2701040A2. In the capacitive touch panels, pluralities of horizontal and vertical electrodes are placed on top of each other so as to form array of capacitors. When users touch a location with their finger, capacitance value of at least one capacitor changes. According to location of the capacitor, capacitance value of which change, and amount of capacitance change, touches location is able to be identified. Although capacitive touch panels are more precise as compared to the resistive touch panels, capacitive touch panels may not satisfies the needs of the users because capacitive touch panels require specific materials for touching (for example user finger or special stylus pens). In other words, capacitive touch panels are unable to determine touch locations of different materials and they are not able to detect pressure, so that they cannot be used below any additional surface. Document GB2138567A discloses a position locating system for calculating the coordinates of a localized force. As disclosed in prior art document US2008238884A1, one of the touch panel types is piezoelectric touch panel. In the piezoelectric touch panels, plurality of the piezoelectric pressure sensors are placed behind a touch surface in an array form. When users touch said surface, piezoelectric sensors reads different pressure values according to the touch location. By comparing the read pressure values of the piezoelectric sensors, touch location is determined. With the piezoelectric touch panels, touch locations are able to be determined precisely, multi-touches are able to be determined and different materials are able to be used for touching. However, in the piezoelectric touch panels, in order to detect touch location precisely, sensitivity of the piezoelectric sensors should be high and said high sensitivity may cause false positive detections (such as detection of a touch although user do not touch said surface). The other problem occurs when a user presses an area other than the button boundaries, because piezoelectric sensors measures displacement of surface, it is not easy to distinguish difference. This problem increases in multiple button applications, since this leads to a high failure rate for detecting the correct button.

### Object of the Invention

Therefore, it is the main object of the present invention to provide an improved detection method for the piezoelectric touch panel.

Another aim of the present invention is to provide a touch detection method preventing false positive situations.

Another aim of the present invention is to provide a touch detection method with high accuracy.

### Brief description

The invention is as set out in the independent claims. According to the present application, a touch detection method for the piezoelectric touch panel P comprising plurality of piezoelectric sensors placed behind a touch surface S is provided. Said touch detection method comprises the steps of; initializing the piezoelectric sensors of the piezoelectric touch panel; reading the sensor values of the piezoelectric sensors; comparing the readout values of the piezoelectric sensor with a first threshold value; if readout value of none of the piezoelectric sensors is higher than said first threshold value, then determining no touch situation occurs and returning to step of reading the sensor values; if readout value of at least one piezoelectric sensor is higher than said first threshold value, then summing the readout value of all sensors and comparing summed value with a second threshold value; if summed value is higher than said second threshold value, then determining accidental touch situation occurs and returning to step of reading the sensor values; if summed value is lower than said second threshold value, then starting a self-calibration process; according to self-calibration process, detecting the touch location.

According to an embodiment of the invention it is advantageous that the method is further characterized by comprising the following steps of:
- after the touch location is detected, then comparing the detected touch location with a sense region;
- if touch location is inside a sense region, then performing action related to the region enclosing detected touch location;
- if touch location is not inside any sense regions, then returning to step of reading the sensor values.

The touch detection method is further characterized in that the self calibration process measures the time of the piezoelectric sensor at which it is under pressure and comparing this time with a predetermined value to set the duration of a sampling interval wherein the actual time duration of the pressurized piezoelectric sensor is determined, when a piezoelectric sensor has read out values which have an amount of zero at least three times in a consecutive manner so that the first value of zero of those three values of zero defines the actual time duration so that after the actual time duration no pressure is applied on the piezoelectric sensor.

According to a further embodiment of the invention, the self calibration process comprises the following steps:
- measuring the pressure receiving duration of the piezoelectric sensors;
- comparing said duration with a maximum time value; if said duration is higher than the maximum time value, then setting maximum time as a sampling interval;
- if said duration is lower than the maximum time value, then comparing said duration with a minimum time value;
- if said duration is higher than the minimum time value, then ending the timer if at least three read out values of zero detected in a consecutive manner within a defined time frame, in particular within the maximum time, wherein the read out values of a piezoelectric sensor detects at least three zero crossings wherein the first zero crossing determines to set time t of the actual time duration of the pressurized piezoelectric sensor and setting duration as said sampling interval;
- if said duration is lower than the minimum time value, then setting minimum time value as sampling duration; averaging the readout values of the piezoelectric sensors over set sampling time.

The invention is in particular applicable on a piezoelectric touch panel comprising plurality of piezoelectric sensors placed behind a touch surface, characterized by performing a touch detection method.

According to the touch detection method of the present application, due to the self-calibration process, location of touch is determined easily. Moreover, by comparing the sum of all piezoelectric sensor values with second threshold value, accidental touch situations and actual touch situations are able to be distinguished. Therefore, according to the present application, false positive situations are detected.

### Object of the Invention

Therefore, it is the main object of the present invention to provide an improved detection method for the piezoelectric touch panel.

Another aim of the present invention is to provide a touch detection method preventing false positive situations.

Another aim of the present invention is to provide a touch detection method with high accuracy.

### Description of Drawings

Figure 1 shows a flow chart of the touch detection method of the present invention.

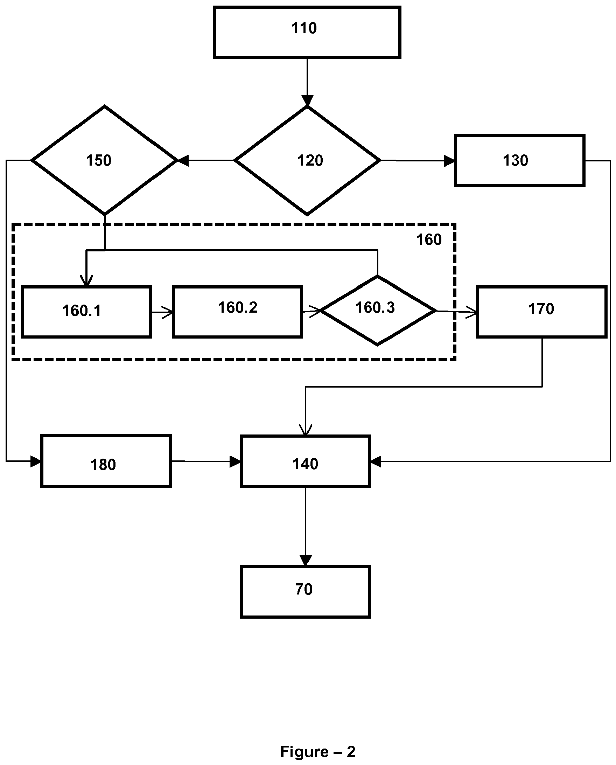

Figure 2 shows a flow chart of the self-calibration process of the present invention.
Figure 3 shows a piezoelectric touch panel using the touch detection method of the present invention.
Figure 4 shows an auto-calibration process according to the present invention

### Detailed Description of the Invention

In order to receive users inputs, touch panels are able to be used with variety of electronic devices. Different type of touch panels are used for detecting the touch location over touch panel. One of the touch panel types is piezoelectric touch panel wherein, piezoelectric pressure sensors are placed behind a touch surface in an array form. In the piezoelectric touch panels, in order to detect touch location precisely, sensitivities of the piezoelectric sensors should be high. However, when sensitivities of the piezoelectric sensors are high, false positive situation occurs, because it measures mechanical displacement over the surface which is not localized and not sensitive. Therefore, with the present application, a touch detection method for the piezoelectric touch panel is provided, wherein false positive situations are prevented.

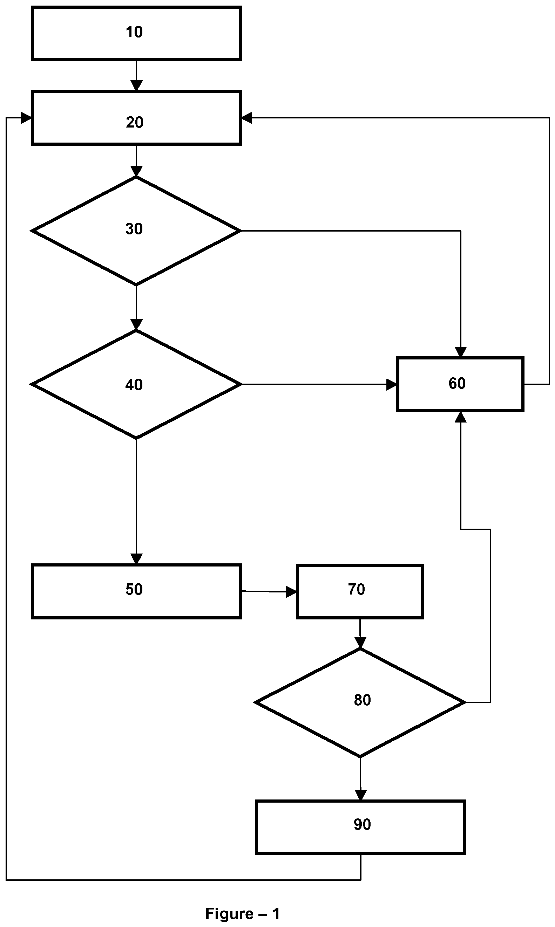

A flow chart of the touch detection method of the present application is shown in figure 1. Said touch detection method comprises the steps of, initializing the piezoelectric sensors of the piezoelectric touch panel 10; reading the sensor values of the piezoelectric sensors 20; comparing the readout values of the piezoelectric sensor with a first threshold value 30; if readout value of none of the piezoelectric sensors is higher than said first threshold value, then determining no touch situation occurs 60 and returning to step of reading the sensor values 20; if readout value of at least one piezoelectric sensor is higher than said first threshold value, then summing the readout value of all sensors and comparing summed value with a second threshold value 40; if summed value is higher than said second threshold value, then determining accidental touch situation occurs 60 and returning to step of reading the sensor values 20; if summed value is lower than said second threshold value, starting a self-calibration process 50; according to self-calibration process 50, detecting the touch location 70. Said threshold values are recorded over an analog to digital converter ADC of a microcontroller and converted to an integer value. For instance this integer values can be between 0 - 150, however this values can be changed according the application. Lower threshold can be selected such as 5 and higher threshold can have a maximum of 300 and can be compared with sum of all ADC's, again these values can be changed.

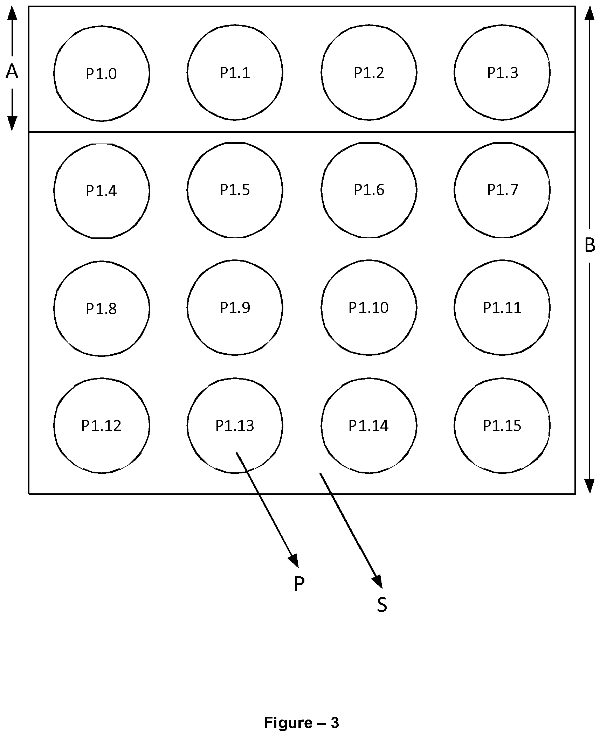

In an exemplary embodiment of the present application, touch detection method is used with a piezoelectric touch panel P as shown in figure 3. Figure 3 shows according to A a four button solution and according to B a sixteen button solution. Said piezoelectric touch panel P comprises 16 piezoelectric sensors P1.0 to P1.15, placed behind a touch surface S. When user touches said touch surface S, according to the touch location, different forces are exerted to different piezoelectric sensors P1, ie a higher force is exerted on a piezoelectric sensor P1.1, which is closer to touch location, as compared to a piezoelectric sensor P1.2, which is farther from touch location. Therefore, by comparing the readout values of the piezoelectric sensors P1, in the step of detecting touch location 70, touch location is able to be detected. Comparison is done with straight forward method; piezoelectric sensors P1 are connected ADC's of microcontroller so that microcontroller reads array of numbers, said first sensor is P1.0 and last sensor is P1.n, system will keep first sensor P1.0 in a variable called "maxima" and compare each array value until it reaches P1.n, during this process "maxima" is updated when an higher value comes. According to the touch detection method of the present application, since the readout values of individual sensors are compared with the first threshold value and summation of the readout values of the sensors are compared with the second threshold value, false positive situations due to hitting the surface S to an object (or vice versa) are able to be prevented.

Touch panels comprises sense regions, which are assigned to a specific action. In a preferred embodiment of the present application, after the touch location is detected, the detected touch location is compared with a sense region 80. If touch location is inside a sense region, action related to the region enclosing detected touch location is performed 90. If touch location is not inside any sense regions, it is assumed that no touch situation occurs 60 and method returns to step of reading the sensor values 20.

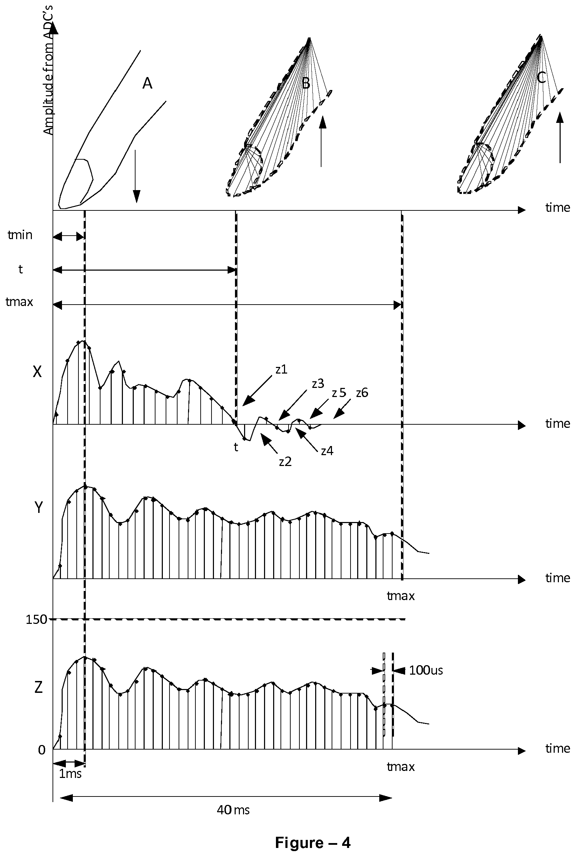

In an exemplary embodiment of the present application, said self-calibration process 50 comprises the steps of, measuring the pressure receiving duration of the piezoelectric sensors 110; comparing said duration with a maximum time value, tₘₐₓ 120; if said duration is higher than the maximum time value (eg. 40ms), then setting maximum time as a sampling interval 130; if said duration is lower than the maximum time value, comparing said duration with a minimum time value tₘᵢₙ 150; if said duration is higher than the minimum time (eg. 1ms) value, ending timer if at least three consecutive zero crossings detected 160. In this process (160), positive and negative signs are kept (160.1) then if positive to negative sign transition occurs, z1 is set to zn flag (160.2) and measurement time is set if three consecutive zero crossings occurs (160.3) In Figure 4 six zero crossings are (z1 to z6) shown. After at least first three zero crossings, other zero crossings are neglected and setting duration as said sampling interval (eg. 100us) 170; if said duration is lower than the minimum time value, setting minimum time value as sampling duration 180; averaging the readout values of the piezoelectric sensors over set sampling time 140. Zero crossing is detected by comparing consecutive reads where a positive read follows negative read or negative read follows a positive read for instance in Figure 4, z1 event occurred because a positive read was followed by a negative read. Also z2 event occurred because a negative read was followed by a positive read. If three consecutive zero crossing event occurred, such as z1, z2, z3, then remaining zero crossings will be neglected and time frame set to time t. This means that the actual time duration of the pressurized piezoelectric sensor is determined, wherein the piezoelectric sensor P1 has read out values which have an amount of zero at least three times in a consecutive manner so that the first value of zero z1 of those three values of zero defines the actual time duration of the pressurized piezoelectric sensor P1. In particular, if for any reason one erroneous zero crossing is detected by a piezoelectric sensor which is not followed by two other zero crossings summing up to at least two or three zero crossings, then such a false read out value of a piezoelectric sensor could be identified. Because system uses piezoelectric elements as a pressure sensor it is highly possible to get some erroneous zeros in different pressing positions, so that three or more consecutive zeros, system will be sure releasing occurs. In this embodiment, short touch situations and long touch situations are able to be distinguished according to the maximum and minimum time values. Therefore, different short touch actions and long touch actions are able to be assigned to sense regions.

Novel features of this invention can be explained with an example but this features are not limited with this example. Let's say lower threshold (first threshold) is 5 and higher (second threshold) is 300. Each ADC can read values up to 150 and there are four piezoelectric sensors P1.0 to P1.3.

Logical expression for accepted touch is:
("P1.0>First threshold" **OR** "P1.1>First threshold" **OR** "P1.2>First threshold" **OR** "P1.3>First threshold") **AND** ("Sum<Second threshold")

False detection, user touched outside area or touch accidentally;

| | | | |
|---|---|---|---|
| P1.0 = 2 | 2<5 | P1.0<First threshold | FALSE |
| P1.1 = 1 | 1<5 | P1.1<First threshold | FALSE |
| P1.2 = 0 | 0<5 | P1.2<First threshold | FALSE |
| P1.3 = 1 | 1<5 | P1.3<First threshold | FALSE |
| Sum = 4 | 4<300 | Sum<Second threshold | TRUE |

| | | | |
|---|---|---|---|
| P1.0 to P1.3 all less then first threshold (all FALSE), then false detection, no key pressed | | | |

Another false detection, user touched outside area or touch accidentally;

| | | | |
|---|---|---|---|
| P1.0 = 0 | 0<5 | P1.0<First threshold | FALSE |
| P1.1 = 1 | 1<5 | P1.1<First threshold | FALSE |
| P1.2 = 1 | 1<5 | P1.2<First threshold | FALSE |
| P1.3 = 4 | 4<5 | P1.3<First threshold | FALSE |
| Sum = 6 | 6<300 | Sum<Second threshold | TRUE |

| | | | |
|---|---|---|---|
| P1.0 to P1.3 all less then first threshold (all FALSE), then false detection, no key pressed | | | |

False detection, user hit button area accidentally;

| | | | |
|---|---|---|---|
| P1.0 = 150 | 150>5 | P1.0>First threshold | TRUE |
| P1.1 = 120 | 120>5 | P1.1>First threshold | TRUE |
| P1.2 = 50 | 50>5 | P1.2>First threshold | TRUE |
| P1.3 = 20 | 20>5 | P1.3>First threshold | TRUE |
| Sum = 340 | 340>300 | Sum>Second threshold | FALSE |

| | | | |
|---|---|---|---|
| P1.0 to P1.3 all higher than first threshold but Sum is greater then second threshold, then false detection, no key pressed | | | |

Acceptable detection, user presses P1.1;

| | | | |
|---|---|---|---|
| P1.0 = 40 | 40>5 | P1.0>First threshold | TRUE |
| P1.1 = 90 | 90>5 | P1.0>First threshold | TRUE |
| P1.2 = 15 | 15>5 | P1.0>First threshold | TRUE |
| P1.3 = 2 | 2<5 | P1.0<First threshold | FALSE |
| Sum = 147 | 147<300 | Sum< Second threshold | TRUE |

**Accepted,** auto calibration process starts

Auto-calibration working as shown in Figure 4, for accepted detection above:
First readouts are done without averaging, so false detection values are read instantaneously and time independent. If false detection flag is true, then auto-calibration process is not started. If detection acceptable after initial instantaneous readouts then auto-calibration process started.

In auto-calibration process all ADC's start auto-calibration P1.0 to P1.3. It is highly dependent to user what kind of pressure applied.

The finger shown in figure 4 shows at A the pressing of an piezoelectric button and at B when the finger is lifted from the display which is shorter than tmax. The finger at C shows that the finger is lifted up longer than tmax.

Further, figure 4 shows at X the ADC values shorter than tmax. Furthermore, at Y figure 4 shows ADC values longer than tmax and at Z sample values on the graph.

Figure 4. summarizes different windows, one user can press very hard and for a short interval, but other user can press soft and for a long interval and the other user can do both namely pressing the button for a long time and hard. Without this novel auto-calibration, it is not possible to put any threshold for users because threshold values also change user to user and time to time. Auto-calibration method normalizes each press by changing averaging time frame and allows us to put static thresholds.

Infinite possibilities can be occurred during touch about duration and pressure. As an example some common patterns can be given, such as hard and short press (general male pattern) and soft and long press (general female pattern). In this examples sampling interval can be taken as 100us and maximum time value 40ms.

Hard and short press to P1.1.
Time frame=20ms (because zero crossing event occurs less than maximum time frame) N=100us
Number of samples=200

| | |
|---|---|
| Σ (0-200) P1.0 = 400 | P1.0= Σ (0-200) P1.0 / 200 = 2 |
| Σ (0-200) P1.1 = 5000 | P1.0= Σ (0-200) P1.0 / 200 = 25 |
| Σ (0-200) P1.2 = 600 | P1.0= Σ (0-200) P1.0 / 200 = 3 |
| Σ (0-200) P1.3 = 200 | P1.0= Σ (0-200) P1.0 / 200 = 1 |

Soft and long press to P1.1.
Time frame=40ms (actual duration is higher than 40ms but it can exceed maximum time frame)
N=100us
Number of samples=400

| | |
|---|---|
| Σ (0-400) P1.0 = 800 | P1.0= Σ (0-400) P1.0 / 400 = 2 |
| Σ (0-400) P1.1 = 10000 | P1.0= Σ (0-400) P1.0 / 400 = 25 |
| Σ (0-400) P1.2 = 1200 | P1.0= Σ (0-400) P1.0 / 400 = 3 |
| Σ (0-400) P1.3 = 400 | P1.0= Σ (0-400) P1.0 / 400 = 1 |

After auto-calibration;
P1.0 = 2
P1.1 = 25
P1.2 = 3
P1.3 = 1
(P1.0, P1.2, P1.3) < P1.1 then P1.1 pressed

It is obviously seen in the given examples that the system according to the invention easily distinguishes and normalizes differences between hard, short, soft and long pressing patterns. This novel auto calibration feature handles especially pressing pattern differences between male and female users.

According to the touch detection method of the present application, thanks to the self-calibration process 50, location of touch is determined easily. Moreover, by comparing the sum of all piezoelectric sensor P1 values with second threshold value, accidental touch situations and actual touch situations are able to be distinguished. Therefore, according to the present application, false positive situations are detected. A touch detection method for the piezoelectric touch panel P comprising a plurality of piezoelectric sensors P1 placed behind a touch surface S is provided. Said touch detection method comprises the steps of: initializing the piezoelectric sensors of the piezoelectric touch panel 10; reading the sensor values of the piezoelectric sensors 20; comparing the readout values of the piezoelectric sensor with a first threshold value 30; if readout value of none of the piezoelectric sensors is higher than said first threshold value, then determining no touch situation occurs 60 and returning to step of reading the sensor values 20; if readout value of at least one piezoelectric sensor is higher than said first threshold value, then summing the readout value of all sensors and comparing summed value with a second threshold value 40; if summed value is higher than said second threshold value, then determining accidental touch situation occurs 60 and returning to step of reading the sensor values 20; if summed value is lower than said second threshold value, then starting a self-calibration process 50; performing the self-calibration process 50, to detect the touch location 70.

### Reference numbers

| | |
|---|---|
| Piezoelectric touch panel | (P) |
| Piezoelectric sensor | (P1) |
| Touch surface | (S) |
| Initializing piezoelectric sensors | (10) |
| Reading sensor values | (20) |
| Comparing read values with first threshold | (30) |
| Comparing sum of the sensor values with second threshold | (40) |
| Self-calibration process | (50) |
| Determining accidental touch situation | (60) |
| Detecting touch location | (70) |
| Comparing detected location with sense regions | (80) |
| Performing action related to region | (90) |
| Measuring duration for receiving sensor values | (110) |
| Comparing duration with maximum time | (120) |
| Set maximum time as sampling interval | (130) |
| Average sensor values over sampling time | (140) |
| Comparing time period with minimum time | (150) |
| End timer if 3 zero crossing detected | (160) |
| Keep positive and negative signs | (160.1) |
| Set z1 to zn flag if positive to negative transition occurs | (160.2) |
| Set measurement time if three consecutive zero crossings occur | (160.3) |
| Set measured time period as sampling interval | (170) |
| Set minimum time as sampling interval | (180) |

## Claims

1. Touch detection method for a piezoelectric touch panel (P) comprising a plurality of piezoelectric sensors (P1) placed behind a touch surface (S), said touch detection method comprises the steps of:
- initializing the piezoelectric sensors of the piezoelectric touch panel (10);
- reading the sensor values of the piezoelectric sensors (20);
- comparing the readout values of the piezoelectric sensors with a first threshold value (30);
- if none readout value of the piezoelectric sensors is higher than said first threshold value, then determining that no touch situation occurs (60) and returning to the step of reading the sensor values (20);
- if at least one of the readout values of the piezoelectric sensors is higher than said first threshold value, then summing the readout value of all sensors and comparing the summed value with a second threshold value (40);
- if the summed value is higher than said second threshold value, then determining that an accidental touch situation occurs (60) and returning to the step of reading the sensor values (20);
- if the summed value is lower than said second threshold value, then starting a self-calibration process (50);
- performing the self-calibration process (50) to detect the touch location (70).

2. Touch detection method according to claim 1, **characterized by** comprising the steps of:
- after the touch location is detected, then comparing the detected touch location with a sense region (80);
- if the touch location is inside a sense region, then performing an action related to the region enclosing the detected touch location (90);
- if the touch location is not inside any sense regions, then returning to the step of reading the sensor values (20).

3. Touch detection method according to claim 1 or 2 wherein the self calibration process (50) measures the time of the piezoelectric sensor (P1) at which it is under pressure and compares this time with a predetermined value to set the duration of a sampling interval wherein the actual time duration of the pressurized piezoelectric sensor (P1) is determined when a piezoelectric sensor (P1) has read out values which have an amount of zero at least three times in a consecutive manner so that the first value of zero (z1) of those three values of zero allows determining the actual time duration, wherein after the actual time duration no pressure is applied on the piezoelectric sensor (P1).

4. Touch detection method according to any of the claims 1 to 3, **characterized in that**; said self-calibration process (50) comprises the steps of:
- measuring the pressure receiving duration of the piezoelectric sensors (110);
- comparing said duration with a maximum time value (120); if said duration is higher than the maximum time value, then setting the maximum time value as a sampling interval (130);
- if said duration is lower than the maximum time value, then comparing said duration with a minimum time value (150);
- if said duration is higher than the minimum time value, then ending the timer if the read out values of a piezoelectric sensor allow detecting at least three zero crossings wherein the first zero crossing (z1) allows setting a time t of the actual time duration of the pressurized piezoelectric sensor (160) and setting the duration as said sampling interval (170);
- if said duration is lower than the minimum time value, then setting the minimum time value as the sampling interval (180);
- averaging the readout values of the piezoelectric sensors over said sampling interval (140).

5. Piezoelectric touch panel (P) comprising a plurality of piezoelectric sensors (P1) placed behind a touch surface (S), configured to perform a touch detection method according to any of the preceding claims 1 to 4.

## Patentansprüche

1. Berührungserkennungsverfahren für ein piezoelektrisches Touchpanel (P), das mehrere piezoelektrische Sensoren (P1) umfasst, die hinter einer Berührungsfläche (S) angeordnet sind, wobei das Berührungserkennungsverfahren folgende Schritte umfasst:
- Initialisieren der piezoelektrischen Sensoren des piezoelektrischen Touchpanels (10);
- Auslesen der Sensorwerte der piezoelektrischen Sensoren (20);
- Vergleichen der Auslesewerte der piezoelektrischen Sensoren mit einem ersten Schwellenwert (30);
- wenn kein Auslesewert der piezoelektrischen Sensoren höher ist als der erste Schwellenwert, dann Bestimmen, dass keine Berührungssituation vorliegt (60), und Zurückgehen zum Schritt des Auslesens der Sensorwerte (20);
- wenn wenigstens einer der Auslesewerte der piezoelektrischen Sensoren höher ist als der erste Schwellenwert, dann Summieren des Auslesewerts aller Sensoren und Vergleichen des summierten Wertes mit einem zweiten Schwellenwert (40) ;
- wenn der summierte Wert höher ist als der zweite Schwellenwert, dann Bestimmen, dass eine zufällige Berührungssituation vorliegt (60), und Zurückgehen zum Schritt des Auslesens der Sensorwerte (20);
- wenn der summierte Wert niedriger ist als der zweite Schwellenwert, dann Starten eines Selbstkalibrierungsprozesses (50);
- Durchführen des Selbstkalibrierungsprozesses (50), um die Berührungsstelle zu erkennen (70).

2. Berührungserkennungsverfahren nach Anspruch 1, **dadurch gekennzeichnet, dass** es folgende Schritte umfasst:
- nachdem die Berührungsstelle erkannt wird, dann Vergleichen der erkannten Berührungsstelle mit einem Erfassungsbereich (80);
- wenn sich die Berührungsstelle innerhalb eines Erfassungsbereichs befindet, dann Durchführen einer Handlung, die mit dem Bereich, der die erkannte Berührungsstelle umschließt, in Zusammenhang steht (90);
- wenn sich die Berührungsstelle nicht innerhalb irgendwelcher Erfassungsbereiche befindet, dann Zurückgehen zum Schritt des Auslesens der Sensorwerte (20).

3. Berührungserkennungsverfahren nach Anspruch 1 oder 2, wobei der Selbstkalibrierungsprozess (50) die Zeit des piezoelektrischen Sensors (P1) misst, zu der dieser unter Druck steht, und diese Zeit mit einem vorgegebenen Wert vergleicht, um die Dauer eines Abtastzeitraums einzustellen, in dem die tatsächliche Zeitdauer des unter Druck gesetzten piezoelektrischen Sensors (P1) bestimmt wird, wenn ein piezoelektrischer Sensor (P1) Auslesewerte aufweist, die wenigstens drei Mal hintereinander einen Betrag von Null aufweisen, so dass der erste Nullwert (z1) dieser drei Nullwerte ein Bestimmen der tatsächlichen Zeitdauer gestattet, wobei nach der tatsächlichen Zeitdauer kein Druck auf den piezoelektrischen Sensor (P1) ausgeübt wird.

4. Berührungserkennungsverfahren nach einem der Ansprüche 1 bis 3, **dadurch gekennzeichnet, dass** der Selbstkalibrierungsprozess (50) folgende Schritte umfasst:
- Messen der Druckempfangsdauer der piezoelektrischen Sensoren (110);
- Vergleichen der Dauer mit einem Maximalzeitwert (120); wenn die Dauer höher ist als der Maximalzeitwert, dann Einstellen des Maximalzeitwerts als Abtastzeitraum (130);
- wenn die Dauer niedriger ist als der Maximalzeitwert, dann Vergleichen der Dauer mit einem Minimalzeitwert (150);
- wenn die Dauer höher ist als der Minimalzeitwert, dann Beenden des Zeitgebers, wenn die Auslesewerte eines piezoelektrischen Sensors ein Erkennen von wenigstens drei Nulldurchgängen gestatten, wobei der erste Nulldurchgang (z1) ein Einstellen einer Zeit t der tatsächlichen Zeitdauer des unter Druck gesetzten piezoelektrischen Sensors (160) und Einstellen der Dauer als Abtastzeitraum (170) gestattet;
- wenn die Dauer niedriger ist als der Minimalzeitwert, dann Einstellen des Minimalzeitwerts als Abtastzeitraum (180);
- Mitteln der Auslesewerte der piezoelektrischen Sensoren über den Abtastzeitraum (140).

5. Piezoelektrisches Touchpanel (P), das mehrere piezoelektrische Sensoren (P1) umfasst, die hinter einer Berührungsfläche (S) angeordnet sind, und dazu ausgestaltet ist, ein Berührungserkennungsverfahren nach einem der vorhergehenden Ansprüche 1 bis 4 durchzuführen.

## Revendications

1. Procédé de détection de toucher pour un panneau tactile piézoélectrique (P) comprenant une pluralité de détecteurs piézoélectriques (P1) placés derrière une surface tactile (S), ledit procédé de détection de toucher comprenant les étapes suivantes :
- initialisation des détecteurs piézoélectriques du panneau tactile piézoélectrique (10) ;
- lecture des valeurs de détecteur des détecteurs piézoélectriques (20) ;
- comparaison des valeurs de lecture des détecteurs piézoélectriques à une première valeur seuil (30) ;
- si aucune valeur de lecture des détecteurs piézoélectriques n'est supérieure à ladite première valeur seuil, détermination du fait qu'aucune situation de toucher ne se produit (60) et retour à l'étape de lecture des valeurs de détecteur (20) ;
- si au moins l'une des valeurs de lecture des détecteurs piézoélectriques est supérieure à ladite première valeur seuil, addition de la valeur de lecture de tous les détecteurs et comparaison de la valeur additionnée à une deuxième valeur seuil (40) ;
- si la valeur additionnée est supérieure à ladite deuxième valeur seuil, détermination du fait qu'une situation de toucher accidentelle se produit (60) et retour à l'étape de lecture des valeurs de détecteur (20) ;
- si la valeur additionnée est inférieure à ladite deuxième valeur seuil, démarrage d'un processus d'auto-étalonnage (50) ;
- mise en oeuvre du processus d'auto-étalonnage (50) pour détecter la position de toucher (70).

2. Procédé de détection de toucher selon la revendication 1, **caractérisé en ce qu'**il comprend les étapes suivantes :
- après que la position de toucher est détectée, comparaison de la position de toucher détectée à une région de détection (80) ;
- si la position de toucher est comprise dans une région de détection, mise en oeuvre d'une action relative à la région comprenant la position de toucher détectée (90) ;
- si la position de toucher n'est pas comprise dans une quelconque région de détection, retour à l'étape de lecture des valeurs de détecteur (20).

3. Procédé de détection de toucher selon la revendication 1 ou 2, dans lequel le processus d'auto-étalonnage (50) mesure le temps où le détecteur piézoélectrique (P1) est sous pression et compare ce temps à une valeur prédéterminée pour établir la durée d'un intervalle d'étalonnage dans lequel est déterminée la durée actuelle durant laquelle le détecteur piézoélectrique est sous pression (P1) quand un détecteur piézoélectrique (P1) présente des valeurs de lecture à valeur nulle au moins trois fois de suite de telle sorte que la première valeur nulle (z1) de ces trois valeurs nulles permet de déterminer la durée actuelle, dans lequel, après la durée actuelle, aucune pression n'est appliquée au détecteur piézoélectrique (P1) .

4. Procédé de détection de toucher selon l'une quelconque des revendications 1 à 3, **caractérisé en ce que** ledit processus d'auto-étalonnage (50) comprend les étapes suivantes :
- mesure de la durée de réception de pression des détecteurs piézoélectriques (110) ;
- comparaison de ladite durée à une valeur temporelle maximale (120) ; si ladite durée est supérieure à la valeur temporelle maximale, établissement de la valeur temporelle maximale à un intervalle d'étalonnage (130) ;
- si ladite durée est inférieure à la valeur temporelle maximale, comparaison de ladite durée à une valeur temporelle minimale (150) ;
- si ladite durée est supérieure à la valeur temporelle minimale, arrêt de la minuterie si les valeurs de lecture d'un détecteur piézoélectrique permettent la détection d'au moins trois passages par zéro, dans lequel le premier passage par zéro (z1) permet l'établissement d'un temps t de la durée actuelle du détecteur piézoélectrique sous pression (160) et l'établissement de la durée audit intervalle d'étalonnage (170) ;
- si ladite durée est inférieure à la valeur temporelle minimale, établissement de la valeur temporelle minimale à l'intervalle d'étalonnage (180) ;
- calcul de la moyenne des valeurs de lecture des détecteurs piézoélectriques sur ledit intervalle d'étalonnage (140).

5. Panneau tactile piézoélectrique (P) comprenant une pluralité de détecteurs piézoélectriques (P1) placés derrière une surface tactile (S), configuré pour mettre en oeuvre un procédé de détection de toucher selon l'une quelconque des revendications précédentes 1 à 4.
